# EUROPEAN PATENT APPLICATION

(11) **EP 4 403 970 A1**
(43) Date of publication of application: **24.07.2024**
(21) Application number: 22867285.3
(22) Date of filing: 01.09.2022
(51) Int. Cl.: G02B 6/44, G02B 6/02, G02B 6/46

(54) **OPTICAL FIBER CABLE, OPTICAL FIBER TAPE CORE, CONSTRUCTION METHOD OF OPTICAL FIBER CABLE, AND OPTICAL TRANSMISSION SYSTEM**

(30) Priority: 13.09.2021 JP 2021148367
(71) Applicant: Fujikura Ltd., Tokyo 135-8512 (JP)
(72) Inventor: TAKEDA, Daiki, Sakura-shi, Chiba 285-8550 (JP); OSATO, Ken, Sakura-shi, Chiba 285-8550 (JP); KURAMITSU, Ryo, Sakura-shi, Chiba 285-8550 (JP)
(74) Representative: Ter Meer Steinmeister & Partner
(86) International application number: PCT/JP2022/032991
(87) International publication number: WO 2023/037963

(57) **Abstract**

An optical fiber cable 1 includes a multi-core optical fiber 30 including cores 32A to 32D, and a piece of arrangement information associated with the multi-core optical fiber 30, and the piece of arrangement information is associated with a core arrangement of the cores 32A to 32D in a cross-section of the multi-core optical fiber 30.

## Description

### [TECHNICAL FIELD]

The present invention relates to an optical fiber cable including a multi-core optical fiber, an optical fiber ribbon including a multi-core optical fiber, a method of installing an optical fiber cable including a multi-core optical fiber, and an optical transmission system including a multi-core optical fiber.

For designated countries that are permitted to be incorporated by reference in the literature, the contents of Patent Application No. 2021-148367 filed with Japan Patent Office on September 13, 2021 is incorporated herein by reference and is regarded as a part of the description of this specification.

### [BACKGROUND ART]

A multi-core optical fiber including cores, a marker, and a common cladding covering the cores and the marker is known (for example, refer to Patent Document 1). In the cross section of this multi-core optical fiber, the cores are arranged to have symmetry, and the marker is arranged at a position to break the symmetry.

### [CITATION LIST]

### [PATENT DOCUMENT]

PATENT DOCUMENT 1: JP 2011-170099 A1

### [SUMMARY OF THE INVENTION]

### [Problems to be solved by Invention]

As described above, in the multi-core optical fiber, since the symmetry of the arrangement of the cores is lost by the marker, the arrangement (core arrangement) of the cores in the cross section of the optical fiber is different depending on the direction in which the cross section of the optical fiber is viewed. That is, as the core arrangement of the multi-core optical fiber, there are two opposing core arrangements that are the core arrangement (normal arrangement) in the cross section of the optical fiber as viewed from one end side and the core arrangement (reverse arrangement) in the cross-section of the optical fiber as viewed from the other end side.

Therefore, when the optical fiber cable is installed or connected to a counterpart optical fiber cable or a counterpart device at the installation site, it is necessary to confirm the core arrangement of the multi-core optical fiber included in the optical fiber cable. However, since it is difficult to grasp the core arrangement from the fine cross section of the multi-core optical fiber at the installation site, there is a problem that a long time may be spend on the installing work and the connecting work of the optical fiber cable.

The problem to be solved by the present invention is to provide an optical fiber cable, a method of installing an optical fiber cable, and an optical transmission system capable of improving the workability of the installing work and the connecting work.

### [MEANS FOR SOLVING PROBLEM]

[1] An optical fiber cable according to the present invention is an optical fiber cable comprising: a multi-core optical fiber comprising cores; and a piece of arrangement information associated with the multi-core optical fiber, wherein the piece of arrangement information is associated with a core arrangement of the cores in a cross-section of the multi-core optical fiber.
[2] In the above invention, the optical fiber cable may further comprise: multi-core optical fibers each of which is the multi-core optical fiber; and pieces of arrangement information each of which is the piece of arrangement information, the pieces of arrangement information may be associated with the multi-core optical fibers respectively, two or more pieces of arrangement information may have the same content, and the two or more pieces of arrangement information may be included in the pieces of arrangement information and may be associated with two or more multi-core optical fibers included in the multi-core optical fibers and having the same core arrangement.
[3] In the above invention, the piece of arrangement information may comprise: a piece of first information that specifies a direction of the optical fiber cable; and a piece of second information that indicates the core arrangement based on the direction specified by the piece of first information.
[4] In the above invention, the piece of first information may be shared by pieces of arrangement information each of which is the piece of arrangement information, and the piece of second information may be shared by two or more pieces of arrangement information that are included in the pieces of arrangement information and are associated with two or more multi-core optical fibers included in the multi-core optical fibers and having the same core arrangement.
[5] In the above invention, the piece of first information may include: a content of a display part disposed on an outer peripheral surface of the optical fiber cable or a component of the optical fiber cable, or a direction of the display part, and the piece of second information may include: a color of a linear body or a cylindrical body that holds multi-core optical fibers each of which is the multi-core optical fiber, a mark disposed on the linear body or the cylindrical body, a color of a colored layer that the multi-core optical fiber comprises, or a mark that the multi-core optical fiber comprises.
[6] In the above invention, the optical fiber cable may comprise an optical connecting component connected to an end of the multi-core optical fiber, and at least a part of the piece of arrangement information may be disposed in the optical connecting component.
[7] In the above invention, the optical fiber cable may comprise an optical fiber ribbon comprising the multi-core optical fiber, and at least a part of the piece of arrangement information may be disposed in the optical fiber ribbon.
[8] In the above invention, the optical fiber cable may comprise multi-core optical fibers each of which is the multi-core optical fiber, and the multi-core optical fibers may include: a first multi-core optical fiber in which the core arrangement is a first arrangement, and a second multi-core optical fiber in which the core arrangement is a second arrangement opposite to the first arrangement.
[9] In the above invention, the number of first multi-core optical fibers included in the optical fiber cable may be the same as the number of second multi-core optical fibers included in the optical fiber cable, each of the first multi-core optical fibers may be the first multi-core optical fiber, and each of the second multi-core optical fibers may be the second multi-core optical fiber.
[10] In the above invention, the optical fiber cable may comprise an assembly comprising optical fibers assembled, the optical fibers may include multi-core optical fibers each of which is the multi-core optical fiber, the core arrangements of all of the multi-core optical fibers included in the assembly may be the same, and each of the core arrangements is the core arrangement.
[11] In the above invention, the optical fiber cable may comprise assemblies each of which is the assembly, the assembles may include a first assembly and a second assembly, each of the core arrangements of all of the multi-core optical fibers included in the first assembly may be a first arrangement, and each of the core arrangements of all of the multi-core optical fibers included in the second assembly may be a second arrangement opposite to the first arrangement.
[12] An optical fiber ribbon according to the present invention is an optical fiber ribbon comprising: a multi-core optical fiber comprising cores; and a piece of arrangement information associated with the multi-core optical fiber, wherein the piece of arrangement information is associated with a core arrangement of the cores in a cross-section of the multi-core optical fiber.
[13] In the above invention, the optical fiber ribbon may further comprise: multi-core optical fibers each of which is the multi-core optical fiber; and pieces of arrangement information each of which is the piece of arrangement information, the pieces of arrangement information may be associated with the multi-core optical fibers respectively, two or more pieces of the arrangement information may have the same content, and the two or more pieces of the arrangement information may be included in the pieces of arrangement information and may be associated with two or more multi-core optical fibers included in the multi-core optical fibers and having the same core arrangement.
[14] In the above invention, the piece of arrangement information may comprise: a piece of first information that specifies a direction of the optical fiber ribbon; and a piece of second information that indicates the core arrangement based on the direction specified by the piece of first information.
[15] In the above invention, the piece of first information may be shared by pieces of the arrangement information each of which is the piece of arrangement information.
[16] In the above invention, the piece of first information may include: a content of a display part disposed on an outer peripheral surface of the optical fiber ribbon, or a direction of the display part, and the piece of second information may include: a color of a colored layer that the multi-core optical fiber comprises, or a mark that the multi-core optical fiber comprises.
[17] In the above invention, the optical fiber ribbon may comprise multi-core optical fibers each of which is the multi-core optical fiber, the core arrangements of all of the multi-core optical fibers may be the same, and each of the core arrangements is the core arrangement.
[18] In the above invention, the piece of first information and the piece of second information may be the same.
[19] In the above invention, the optical fiber ribbon may comprise multi-core optical fibers each of which is the multi-core optical fiber, the multi-core optical fibers may include: a first multi-core optical fiber in which the core arrangement is a first arrangement, and a second multi-core optical fiber in which the core arrangement is a second arrangement opposite to the first arrangement.
[20] A method of installing an optical fiber cable according to the present invention is a method of installing an optical fiber cable comprising: a multi-core optical fiber comprising cores; and a piece of arrangement information associated with the multi-core optical fiber, wherein the piece of arrangement information is associated with a core arrangement of the cores in a cross-section of the multi-core optical fiber, and the method comprises referring step of referring the piece of arrangement information.
[21] In the above invention, the piece of arrangement information may comprise: a piece of first information that specifies a direction of the optical fiber cable; and a piece of second information that indicates the core arrangement based on the direction specified by the piece of first information, and the referring step may include distinguishing the core arrangement of the multi-core optical fiber based on the piece of arrangement information.
[22] In the above invention, the referring step may include distinguishing the core arrangement of the multi-core optical fiber based on the piece of arrangement information by using association information that associates the piece of arrangement information with the core arrangement.
[23] In the above invention, the method may comprise: an installing step of installing the optical fiber cable; and a connecting step of connecting the optical fiber cable to the connected object.
[24] In the above invention, the referring step may be performed before the installing step.
[25] An optical transmission system according to the present invention is an optical transmission system comprising an optical fiber cable comprising multi-core optical fibers each comprising cores, wherein the multi-core optical fibers include: a first multi-core optical fiber in which a core arrangement is a first arrangement, the core arrangement being an arrangement of the cores in a cross-section of the multi-core optical fiber, and a second multi-core optical fiber in which the core arrangement is a second arrangement opposite to the first arrangement, and the optical transmission system comprises: a first transmission path for uplink comprising the first multi-core optical fiber, and a second transmission path for downlink comprising the second multi-core optical fiber.
[26] In the above invention, each of the core arrangements of all of the multi-core optical fibers included in the first optical transmission path may be a first arrangement, each of the core arrangements of all of the multi-core optical fibers included in the second optical transmission path may be a second arrangement opposite to the first arrangement, and each of the core arrangements may be the core arrangement.

### [EFFECT OF THE INVENTION]

According to the present invention, the optical fiber cable comprises the piece of arrangement information associated with the core arrangement of the multi-core optical fiber. Therefore, since it is possible to easily distinguish the core arrangement of the multi-core optical fiber, it is possible to improve the workability of the installing work and the connecting work of the optical fiber cable.

According to the present invention, the first transmission path for uplink comprising the first multi-core optical fiber in which the core arrangement is the first arrangement, and the second transmission path for downlink comprising the second multi-core optical fiber in which the core arrangement is the second arrangement opposite to the first arrangement. In this way, by selectively using the multi-core optical fiber for uplink/downlink in accordance with the core arrangement, it is possible to improve the workability of the installing work and the connecting work of the optical fiber cable.

### [BRIEF DESCRIPTION OF DRAWING(S)]

FIG. 1(a) and FIG. 1(b) are cross-sectional views showing the multi-core optical fiber in the first embodiment of the present invention, FIG 1(a) is a cross-sectional view of the multi-core optical fiber viewed from one end side, and FIG. 1(b) is a cross-sectional view of the multi-core optical fiber viewed from the other end side.
FIG. 2 is a perspective view showing the optical fiber ribbon in the first embodiment of the present invention.
FIG. 3 is a cross-sectional view showing the optical fiber cable in the first embodiment of the present invention.
FIG. 4 is a plan view showing the optical fiber cable in the first embodiment of the present invention.
FIG. 5 is a perspective view showing the optical fiber unit in the first embodiment of the present invention.
FIG. 6(a) and FIG. 6(b) are plan views showing the marks attached to the optical fiber unit of the optical fiber cable in the second embodiment of the present invention, and FIG. 6 (b) is a diagram showing the mark inverted with respect to FIG. 6 (a).
FIG. 7 is a plan view showing the optical fiber cable with the optical connector in the third embodiment of the present invention.
FIG. 8 is a perspective view showing the subunit of the optical fiber cable in the fourth embodiment of the present invention.

### [MODE(S) FOR CARRYING OUT THE INVENTION]

Hereinafter, the first embodiment of the present invention will be described with reference to the drawings.

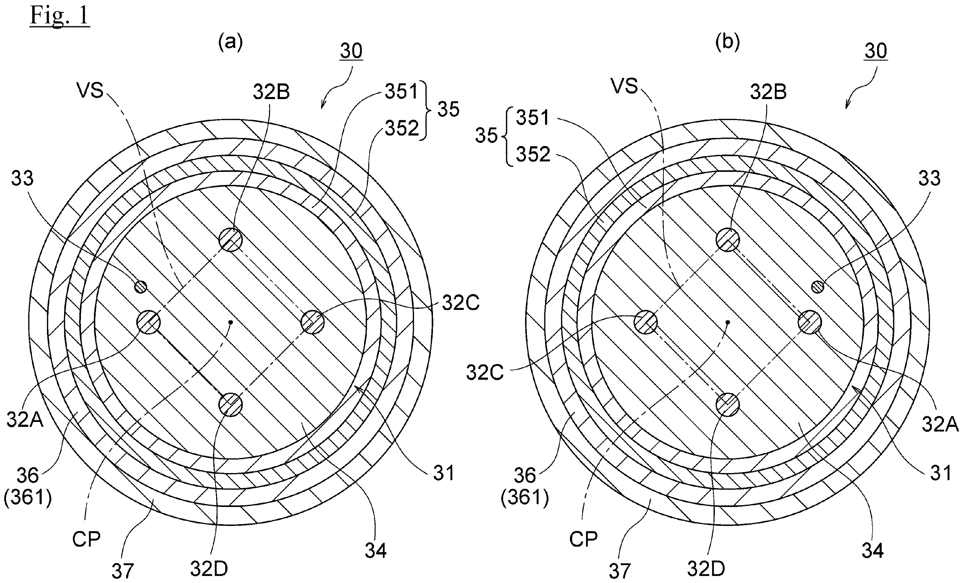

First, the configuration of the multi-core optical fiber 30 in the present embodiment will be described with reference to FIG. 1(a) and FIG. 1(b).

FIG. 1(a) and FIG. 1(b) are cross-sectional views showing the multi-core optical fiber 30 in the present embodiment and show cross sections perpendicular to the axial direction of the multi-core optical fiber 30. FIG 1(a) is a cross-sectional view of the multi-core optical fiber 30 viewed from one end side, and FIG. 1(b) is a cross-sectional view of the multi-core optical fiber 30 viewed from the other end side.

As shown in FIG. 1(a) and FIG. 1(b), the multi-core optical fiber (colored and coated optical fiber) 30 in the present embodiment includes a bare optical fiber (bare fiber) 31, a coating layer 35, an identification mark 36, and a colored layer 37. The multi-core optical fibers in the second to fifth embodiments described later also have basically the same configuration as the multi-core optical fiber 30 in the first embodiment except for the configuration described in detail in the respective embodiments.

The bare optical fiber 31 includes four cores 32A to 32D, a marker (tracer) 33, and a cladding 34. The bare optical fiber 31 has a circular cross-sectional shape as a whole.

Each of the cores 32A to 32D has a circular cross-sectional shape and extends along the axial direction of the multi-core optical fiber 30. Similarly, the marker 33 also has a circular cross-sectional shape and extends along the axial direction of the multi-core optical fiber 30. In the present embodiment, the diameters of the core 32A to 32D are the same, but the diameters of the core 32A to 32D are not particularly limited thereto, and the diameters of the core 32A to 32D may be different from each other. The cladding 34 is a common cladding that surrounds all of the core 32A to 32D and the marker 33.

Each of the cores 32A to 32D, the marker 33 and the cladding 34 is made of a material containing quartz glass as a main component, and the refractive index thereof is adjusted by adding an impurity as necessary. The refractive indexes of the cores 32A to 32D are higher than the refractive index of the cladding 34. The refractive index of the marker 33 is also higher than the refractive index of the cladding 34. In the present embodiment, the refractive indexes of the cores 32A to 32D are the same, but the refractive indexes of the cores 32A to 32D are not particularly limited thereto, and the refractive indexes of the cores 32A to 32D may be different from each other.

The four cores 32A to 32D are respectively arranged at the vertexes of a virtual square VS that shares the center CP with the bare optical fiber 31, and the four cores 32A to 32D have symmetry in the cross section of the fiber. On the other hand, the marker 33 is arranged near a specific core (the core 32A in the present embodiment), and the marker 33 is disposed at a position where the marker 33 breaks the above-mentioned symmetry.

The four cores 32A to 32D are individually identified by being respectively assigned core numbers using this marker 33 as a reference. For example, the core 32A is the "first" core, the core 32B is the "second" core, the core 32C is the "third" core, and the core 32D is the "fourth" core. As will be described later, the core numbers are used for connection management of the respective cores when connecting the optical fiber cable 1 including the multi-core optical fiber 30 to the counterpart object (such as a counterpart optical fiber cable or a counterpart optical connecting component).

In the present embodiment, since the cores 32A to 32D are individually numbered as described above, there are two types of arrangement (hereinafter, it is also simply be referred to as "core arrangement") of cores including a "normal arrangement" shown in FIG. 1(a) and a "reverse arrangement" shown in FIG. 1(b).

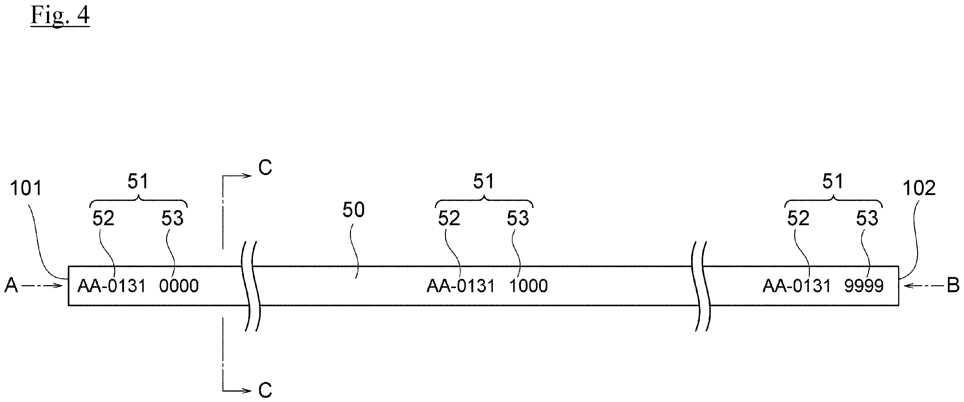

FIG. 1(a) is a cross-sectional view of the multi-core optical fiber 30 when the optical fiber cable 1 including the multi-core optical fiber 30 is viewed from the first end (one end) 101 side. That is, FIG. 1(a) is a cross-sectional view of the multi-core optical fiber 30 when the optical fiber cable 1 is viewed along arrow A in FIG. 4 (described later). On the other hand, FIG. 1(b) is a cross-sectional view of the multi-core optical fiber 30 when the optical fiber cable 1 is viewed from the second end (the other end) 102 side. That is, FIG. 1(b) is a cross-sectional view of the multi-core optical fiber 30 when the optical fiber cable 1 is viewed along the arrow B in FIG. 4.

Specifically, in the "normal arrangement" shown in FIG. 1(a), the first core 32A near the marker 33 is located on the left side in the figure, the second core 32B is located on the upper side in the figure, the third core 32C is located on the right side in the figure, the fourth core 32D is located on the lower side in the figure, and the first to fourth cores 32A to 32D are arranged clockwise in the figure. On the other hand, in the "reverse arrangement" shown in FIG. 1(b), the marker 33 shifts to the right side in the figure compared to FIG. 1(a), the first core 32A near the marker 33 is located on the right side in the figure, the second core 32B is located on the upper side in the figure, the third core 32C is located on the left side in the figure, the fourth core 32D is located on the lower side in the figure, and the first to fourth cores 32A to 32D are arranged counterclockwise in the figure. That is, the "normal arrangement" shown in FIG. 1(a) and the "reverse arrangement" shown in FIG. 1(b) are in a mirror image relationship.

In this way, in the present embodiment, since the individual numbers are assigned to the cores 32A to 32D, the core arrangement of the multi-core optical fiber 30 viewed from the first end 101 side and the core arrangement viewed from the second end 102 side are different from each other, and these core arrangements are mutually reversed.

The "core arrangement" of the multi-core optical fiber in the present embodiment means the order of the arrangement of the numbered cores (cores individually identified using the marker 33 as a reference) in the cross section of the fiber when the respective positions and relative positional relationships of the unnumbered cores (cores that are not individually identified) in the cross section of the fiber are known, and does not indicate the respective positions and relative positional relationships of the unnumbered cores in the fiber cross section. In other words, the "core arrangement" of the multi-core optical fiber in the present embodiment means an arrangement (relative positional relationship) of the cores 32A to 32D that are individually identified from each other using one core 32A specified from the cores 32A to 32D as a reference. In the present embodiment, the specific core 32A is specified based on the marker 33.

The number of cores included in the multi-core optical fiber 30 is not particularly limited to the above. Further, the arrangement of the unnumbered cores in the cross section of the multi-core optical fiber 30 is not particularly limited to the above, and for example, the arrangement of the unnumbered cores may not have symmetry. In this case, since the cores can be individually identified, the marker 33 may be omitted.

Further, the marker for individually identifying the cores 32A to 32D is not particularly limited to the above, as long as the marker is arranged so that the symmetry of the arrangement of the unnumbered cores is lost in the cross section of the multi-core optical fiber 30. Instead of the marker 33 embedded in the cladding 34, for example, a marker including a colored portion or the like may be attached to the outer peripheral surface of the coating layer 35 or the colored layer 37.

The coating layer 35 covers the entire outer circumference of the bare optical fiber 31 described above. The coating layer 35 in the present embodiment has a two-layer structure including a primary layer 351 and a secondary layer 352. The secondary layer 352 is located outside the primary layer 351. The primary layer 351 and the secondary layer 352 are formed by applying a resin material to the outer peripheral surface of the cladding 34 of the bare optical fiber 31 and curing the resin material. As an example of the resin material of which the primary layer 351 and the secondary layer 352 are made, an ultraviolet curable resin material and a thermosetting resin material can be exemplified. The number of layers that the coating layer 35 includes is not limited to the above-mentioned two layers, and the covering layer 35 may have a single layer structure or may include three or more layers.

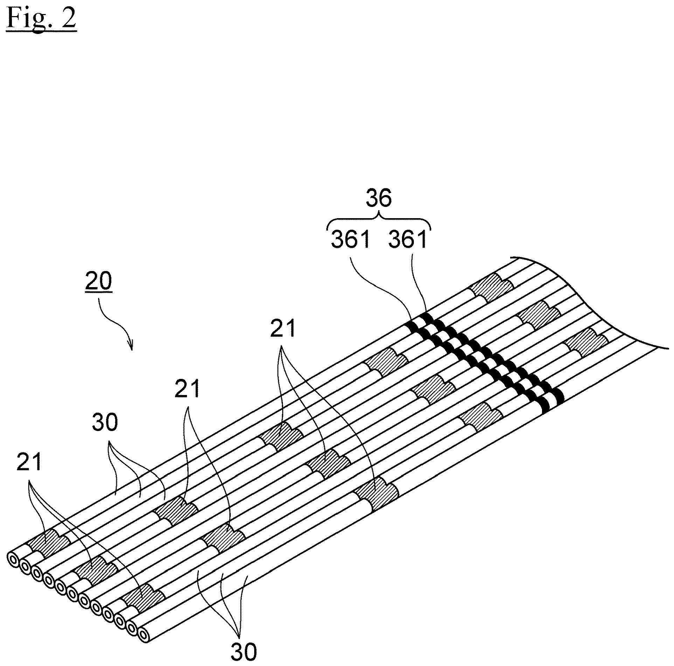

The identification mark 36 is formed on the coating layer 35. The mark 36 is formed by printing and curing ink on the coating layer 35. As a specific printing method for printing the mark 36, for example, an intaglio roll printing method and an inkjet method can be exemplified. As an example of the material of which the mark 36 is made, an ultraviolet curing resin material and a thermosetting resin material can be exemplified. The mark 36 has a predetermined width in the axial direction of the multi-core optical fiber 30 (see FIG. 2 described later), the mark 36 is formed over the entire circumference of the coating layer 35, and the mark 36 has a ring shape. The mark 36 may be formed only in a part of the coating layer 35 in the circumferential direction.

The colored layer 37 covers the entire outer periphery of the coating layer 35 while covering the mark 36. The colored layer 37 is formed by applying a resin material to the surface of the coating layer 35 and curing the resin material. As an example of the resin material of which the colored layer 37 is made, an ultraviolet curable resin material and a thermosetting resin material can be exemplified. The colored layer 37 has a color different from the color of the mark 36, and the colored layer 37 has a color different from the color of the other multi-core optical fibers 30 included in the same optical fiber ribbon 20 (described later).

The positional relationship among the coating layer 35, the mark 36, and the colored layer 37 is not particularly limited to the above. For example, the mark 36 may be disposed on the colored layer 37, or the mark 36 may be disposed under the coating layer 35. Alternatively, the coating layer 35 may be colored to omit the colored layer 37.

The multi-core optical fiber 30 may not include the colored layer 37. In this case, if necessary, other component of the multi-core optical fiber 30 may have the function of the colored layer 37. Similarly, the multi-core optical fiber 30 may not include the mark 36. In this case, if necessary, other component of the multi-core optical fiber 30 may have the function of the mark 36.

Next, the configuration of the optical fiber ribbon 20 using the multi-core optical fiber 30 described above will be described with reference to FIG. 2.

FIG. 2 is a perspective view showing the optical fiber ribbon 20 in the present embodiment.

The optical fiber ribbon 20 in the present embodiment is a so-called intermittently fixed optical fiber ribbon. As shown in FIG. 2, the optical fiber ribbon 20 includes a plurality of (twelve in the present embodiment) multi-core optical fibers 30 and first connecting portions 21. The optical fiber ribbon 20 in the present embodiment corresponds to an example of an "assembly" in the present invention. The optical fiber ribbons in the second to fifth embodiments have basically the same configuration as the optical fiber ribbon 20 in the first embodiment except for the configuration described in detail in the respective embodiments.

Each of the multi-core optical fibers 30 has the configuration described above with reference to FIG. 1(a) and FIG. 1(b). In the present embodiment, all the multi-core optical fibers 30 constituting the same optical fiber ribbon 20 have the same core arrangement (the above-mentioned "normal arrangement" or "reverse arrangement").

In addition to the multi-core optical fiber 30, a single-core optical fiber having a single core may be included in the optical fibers constituting the optical fiber ribbon. That is, the multi-core optical fiber 30 and the single-core optical fiber may be mixed as the optical fibers included in the optical fiber ribbon. For example, the optical fiber ribbon may include one multi-core optical fiber 30, and the remaining optical fibers included in the optical fiber ribbon may be single-core optical fibers.

The multi-core optical fibers 30 are arranged on the same plane so as to extend substantially parallel to each other. The multi-core optical fibers 30 adjacent to each other are connected to each other by the first connecting portions 21 at predetermined intervals in the longitudinal direction of the optical fiber ribbon 20, and the first connecting portions 21 are arranged to be shifted from each other in the longitudinal direction of the optical fiber ribbon 20. The first connecting portion 21 is made of a resin material such as an ultraviolet curable resin material. The connecting portions 21 are formed by intermittently applying an ultraviolet curable resin between adjacent multi-core optical fibers 30 and then irradiating the ultraviolet curable resin with ultraviolet rays to cure it. The connecting portions 21 may be formed by continuously applying and curing an ultraviolet curable resin between the adjacent multi-core optical fibers 30 and then partially cutting the cured resin.

The number of multi-core optical fibers 30 constituting the optical fiber ribbon 20 is not particularly limited to the above. The configuration of the optical fiber ribbon 20 is not particularly limited to the above. For example, the first connecting portions 21 may cover the entire circumference of the multi-core optical fiber 30, or the first connecting portions 21 may cover only a part of the circumference of the multi-core optical fiber 30. The first connecting portions 21 may be disposed not intermittently but may be disposed over the entire area of the optical fiber ribbon 20 in the longitudinal direction. Alternatively, instead of the first connecting portion 21, the multi-core optical fibers 30 may be collectively covered with a resin layer, and the multi-core optical fibers 30 may be connected by the resin layer.

As described above, the colors of the colored layers 37 of the multi-core optical fibers 30 included in the optical fiber ribbon 20 are different from each other. Therefore, it is possible to individually identify the multi-core optical fiber 30 in the optical fiber ribbon 20.

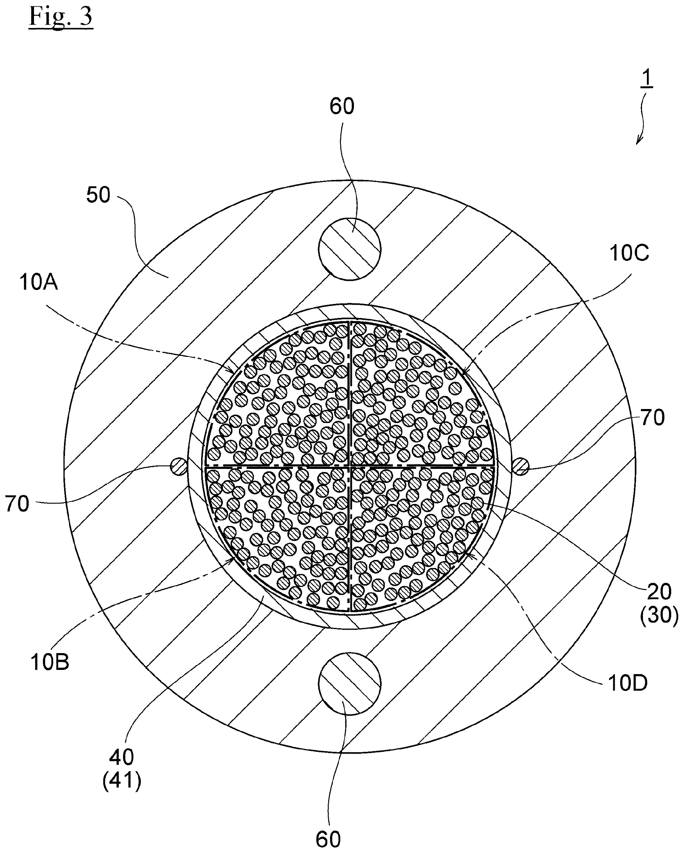

In the optical fiber ribbon 20, for example, when an optical fiber cable 1 (see FIG. 3) described later is configured using the optical fiber ribbons 20, it is possible to individually identify the optical fiber ribbons 20 by a mark 36 attached to the multi-core optical fiber 30.

In the present embodiment, by making the pattern of mark 36 along the axial direction of the multi-core optical fiber 30 different for each optical fiber ribbon 20, it is possible to identify the optical fiber ribbon 20. Although not particularly limited, as a specific example of the mark 36, six types of patterns in which the number and width of rings 361 constituting the mark 36 are different can be exemplified as shown in Table 1 below. Each rectangular mark in Table 1 indicates a ring 361, and six types of patterns are set depending on the combination of the width and number of rings 361.

### <Table 1>

**Table 1**

| Ribbon Number | No.1 | No.2 | No.3 | No.4 | No.5 | No.6 |
|---|---|---|---|---|---|---|
| Pattern of Mark | 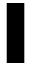 | 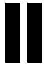 | 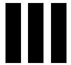 | 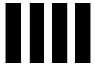 | 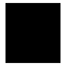 | 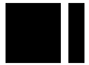 |

In the present embodiment, as shown in FIG. 2, with respect to all the multi-core optical fibers 30 constituting the same optical fiber ribbon 20, the marks 36 are formed at the same position in the axial direction of the multi-core optical fiber 30. Incidentally, in the example shown in FIG. 2, since the mark 36 of the multi-core optical fiber 30 is composed of two narrow rings 361, it is possible to identify that the number of the optical fiber ribbon 20 is "No.2" based on Table 1 above.

Since there is a limit to the number of colors of the colored layer 37, for example, when the optical fiber ribbon 20 includes a larger number of multi-core optical fibers 30, the mark 36 attached to the multi-core optical fiber 30 may be used to identify the multi-core optical fiber 30.

Next, the configuration of the optical fiber cable 1 using the optical fiber ribbon 20 described above will be described with reference to FIG. 3 to FIG. 5.

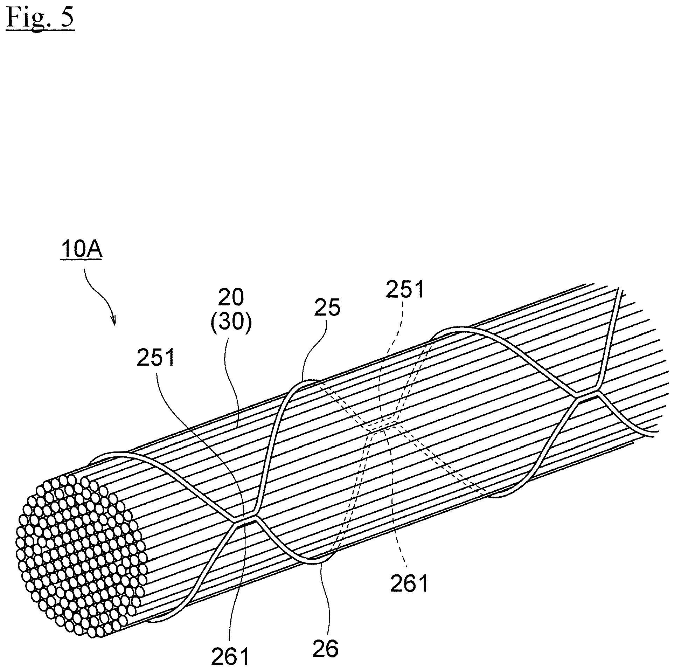

FIG. 3 is a cross-sectional view showing the optical fiber cable 1 in the present embodiment. FIG. 4 is a plan view showing the optical fiber cable 1 in the present embodiment, and FIG. 3 is a cross-sectional view taken along C-C line of FIG. 4. FIG. 5 is a perspective view showing the optical fiber unit 10A in the present embodiment.

The optical fiber cable 1 in the present embodiment is a so-called slotless type optical fiber cable. As shown in FIG. 3 and FIG. 4, the optical fiber cable 1 includes optical fiber units 10A to 10D, a wrapping tube 40, a sheath 50, tensile strength members 60, and rip cords 70. Each of the optical fiber units 10A to 10D in the present embodiment corresponds to an example of an "assembly" in the present invention. The optical fiber cables in the second to fourth embodiments also have basically the same configuration as the optical fiber cable 1 in the first embodiment except for the configurations described in detail in the respective embodiments.

The configuration of the optical fiber cable 1 is not limited to the slotless type, and may be, for example, a loose tube type or a slot type. The optical fiber cable 1 of the present embodiment also includes a type called a so-called optical fiber cord. The optical fiber cord has a configuration in which an assembly of the multi-core optical fibers 30 or the optical fiber ribbons 20 is covered with a jacket via a buffer layer. For example, an aramid fiber can be exemplified as the buffer layer. Since the buffer layer also functions as a tensile strength member in addition to the function of mitigating impact, the optical fiber cord does not include the above-described tensile strength member. As an example of the jacket, polyvinyl chloride (PVC) and flame-retardant polyolefin (PO) can be exemplified.

The optical fiber cable 1 of the present embodiment includes four optical fiber units 10A to 10D. The four optical fiber units 10A to 10D are twisted together. As a specific example of the method of twisting the optical fiber units 10A to 10D, the SZ twisting manner and the unidirectional twisting manner can be exemplified. The SZ twisting manner is a method of twisting linear bodies while reversing the twisting direction at predetermined intervals. The unidirectional twisting manner is a twisting method having only one direction as a twisting direction and is a twisting method in which the linear bodies are spirally twisted together.

Since the four optical fiber units 10A to 10D have the same configuration, the configuration of the optical fiber unit 10A will be described in detail below, and the description of the configuration of the other optical fiber unit 10B to 10D will be omitted. In FIG. 3, although the cross-sectional shapes of the four optical fiber units 10A to 10D are illustrated as having fan-shaped shapes, each of the optical fiber units 10A to 10D may not have a regular cross-sectional shape. Gaps may be formed between the optical fiber units 10A to 10D. The optical fiber units 10A to 10D may not have the same configuration.

As shown in FIG. 5, the optical fiber unit 10A includes the plurality of (six in the present embodiment) optical fiber ribbons 20 that are bundled together and two bundle members 25 and 26. The optical fiber unit 10A is formed by bundling the optical fiber ribbons 20 with the bundle members 25 and 26.

Each of the optical fiber ribbons 20 has the configuration described above with reference to FIG. 2. In the present embodiment, all the multi-core optical fibers 30 constituting all the optical fiber ribbons 20 constituting the same optical fiber unit 10A have the same core arrangement (the above-mentioned "normal arrangement" or "reverse arrangement"). That is, all multi-core optical fibers 30 included in the same optical fiber unit 10A have the same core arrangement. In the optical fiber cables of the second and third embodiments, all multi-core optical fibers included in the same optical fiber unit may have the same core arrangement.

In the present embodiment, all the multi-core optical fibers 30 included in the optical fiber unit 10A have the "normal arrangement" (see FIG. 1(a)) as the core arrangement. Similarly, all the multi-core optical fibers 30 included in the optical fiber unit 10C have the "normal arrangement" (see FIG. 1(a)) as the core arrangement. On the other hand, all the multi-core optical fibers 30 included in the optical fiber unit 10B have the "reverse arrangement" (see FIG. 1(b)) as the core arrangement. Similarly, all the multi-core optical fibers 30 included in the optical fiber unit 10D have the "reverse arrangement" (see FIG. 1(b)) as the core arrangement. In the optical fiber cables of the second and third embodiments, all the multi-core optical fibers included in one optical fiber unit may have the "normal arrangement" as the core arrangement, and all the multi-core optical fibers included in other optical fiber unit may have the "reverse arrangement" as the core arrangement.

Therefore, the optical fiber cable 1 of the present embodiment includes both the multi-core optical fiber 30 having the core arrangement of the "normal arrangement" and the multi-core optical fiber 30 having the core arrangement of the "reverse arrangement". In the optical fiber cable 1 of the present embodiment, the number of multi-core optical fibers 30 having the core arrangement of the "normal arrangement" is the same as the number of multi-core optical fibers 30 having the core arrangement of the "reverse arrangement".

In the second to fourth embodiments, the optical fiber cable may include both the multi-core optical fiber having the core arrangement of the "normal arrangement" and the multi-core optical fiber having the core arrangement of the "reverse arrangement". In the optical fiber cables of the second to fourth embodiments, the number of the multi-core optical fibers having the core arrangement of the "normal arrangement" and the number of the multi-core optical fibers having the core arrangement of the "reverse arrangement" may be the same.

The bundle members 25 and 26 are thread-like, string-like, or tape-like members capable of bundling the optical fiber ribbons 20, and each of the bundle members 25 and 26 is a linear body extending in a linear manner. In the present embodiment, as shown in FIG. 5, one bundle member 25 (upper side in the figure) is wound in an SZ shape around the upper half of the bundle of the optical fiber ribbons 20 in the figure. On the other hand, the other bundle member 26 (lower side in the figure) is wound in an SZ shape around the lower half of the bundle of the optical fiber ribbons 20 in the figure. The bundle members 25 and 26 are joined to each other at the reversing portion 251 of the upper bundle member 25 and the reversing portion 261 of the lower bundle member 26. Incidentally, the winding in an SZ shape is a winding method of winding the bundle member while reversing the winding direction at predetermined intervals, similar to the above-mentioned SZ twisting.

It is possible to identify the optical fiber units 10A to 10D in the optical fiber cable 1 by making the colors of the bundle members 25 and 26 different according to the optical fiber units 10A to 10D. Although not particularly limited, for example, the colors of the bundle members 25 and 26 of the optical fiber unit 10A are "Blue", the colors of the bundle members 25 and 26 of the optical fiber unit 10B are "Orange", the colors of the bundle members 25 and 26 of the optical fiber unit 10C are "Green", and the colors of the optical fiber unit 10D are "Brown". The identifiable number of optical fiber units may be increased by making the color of one bundle member 25 and the color of the other bundle member 26 different in the same optical fiber unit.

The method of winding the bundle members 25 and 26 is not particularly limited to the above. For example, the two bundle members 25 and 26 may be spirally wound so that the winding directions are opposite to each other. The number of bundle members is not particularly limited to the above, and the number of bundle members may be one or three or more.

The member that bundles the optical fiber ribbons 20 is not limited to the bundle member described above. For example, the optical fiber ribbons 20 may be covered with a cylindrical tube member such as an optical fiber cable having a loose tube structure described above.

The configuration of the optical fiber unit is not particularly limited to the above. For example, the optical fiber unit may be configured by twisting the optical fiber ribbons 20 together. Alternatively, the optical fiber unit may be configured by bundling or twisting the multi-core optical fibers 30 instead of the optical fiber ribbon 20. Alternatively, a unit intermediate may be formed by bundling or twisting the optical fiber ribbons 20 or the multi-core optical fibers 30, and the optical fiber unit 10 may be configured by bundling or twisting the unit intermediates.

For example, when using the mark 36 and the colored layer 37 as the arrangement information as described later, instead of the optical fiber units 10A to 10D, a single optical fiber unit configured by bundling or twisting the optical fiber ribbons 20 or the multi-core optical fibers 30 may be accommodated in the sheath 50.

The optical fiber constituting the optical fiber unit may include a single-core optical fiber in addition to the multi-core optical fiber 30. That is, the multi-core optical fiber 30 and the single-core optical fiber may be mixed as the optical fibers included in the optical fiber unit. For example, the optical fiber unit may include one multi-core optical fiber 30, and the remaining optical fibers included in the optical fiber unit may be single-core optical fibers.

That is, at least one multi-core optical fiber 30 may be included in the optical fiber constituting the optical fiber unit 10. Alternatively, at least one multi-core optical fiber 30 may be included in the optical fiber included in the optical fiber cable 1. In the case where the optical fiber cable is of the slot type described above, it is sufficient that at least one multi-core optical fiber 30 is included in the optical fibers accommodated in the groove of the slot rod of the slot type cable.

As shown in FIG. 3, the optical fiber units 10A to 10D are covered with the wrapping tube 40. In the present embodiment, the wrapping tape 41 is longitudinally wound around the outer periphery of the optical fiber units 10A to 10D to form the wrapping tube 40. Specifically, the wrapping tape 41 is wound around the outer periphery of the optical fiber units 10A to 10D in a state in which the longitudinal direction of the wrapping tape 41 corresponds to the axial direction of the optical fiber cable 1 and the width direction of the wrapping tape 41 corresponds to the circumferential direction of the optical fiber cable 1. The winding method of the wrapping tape 41 is not particularly limited to the above and may be, for example, horizontal winding (spiral winding). The optical fiber cable 1 may not include the wrapping tube 40.

The wrapping tape 41 is constituted by a nonwoven fabric or a film. Although not particularly limited, as a specific example of the nonwoven fabric constituting the wrapping tape 41, for example, a nonwoven fabric made of fibers such as polyester, polyethylene (PE) and polypropylene (PP) can be exemplified. On the other hand, although not particularly limited, as a specific example of the film constituting the wrapping tape 41, for example, a film made of a resin such as polyethylene (PE), polypropylene (PP), polyethylene terephthalate (PET), polybutylene terephthalate (PBT) and nylon can be exemplified.

In the case where the wrapping tape 41 is constituted by the nonwoven fabric, the wrapping tube 40 may function as a water absorbing layer for stopping water into the optical fiber cable 1 by adding a water absorbing powder to the nonwoven fabric. At the time of water immersion, the water absorbing powder swells and seals the gap in the optical fiber cable 1 to stop the water inside the optical fiber cable 1.

Although not particularly limited, as a specific example of the water absorbing powder, material having high absorbency such as, for example, a starch-based material, a cellulose-based material, a polyacrylic acid-based material, a polyvinyl alcohol-based material and a polyoxyethylene-based material and mixtures thereof can be exemplified. As a method of adding the water absorbing powder to the nonwoven fabric, the water absorbing powder may be attached (applied) to the surface of the nonwoven fabric or may be interposed between two nonwoven fabrics.

The sheath (jacket) 50 is a cylindrical member covering the outer periphery of the wrapping tube 40. The optical fiber units 10A to 10D wrapped in the wrapping tube 40 is housed in the inner space of the sheath 50. If the optical fiber cable 1 does not include the wrapping tube 40, the outer periphery of the optical fiber units 10A to 10D is covered with the sheath 50. As an example of the material of which the sheath 50 is made, a resin material such as polyvinyl chloride (PVC), polyethylene (PE), nylon, ethylene fluoride, polypropylene (PP) and polyolefin resin and mixtures of these resin materials can be exemplified. An additive such as a flame retardant and a stabilizer may be added to the above resin material.

A pair of tensile strength members 60 and a pair of rip cords 70 are embedded in the sheath 50. Each of the tensile strength members 60 is a linear member for suppressing distortion and bending applied to the multi-core optical fibers 30 due to shrinkage of the sheath 50. As each of the tensile strength members 60, for example, a linear body having a circular cross-sectional shape can be used. Each of the tensile strength members 60 extends along the axial direction of the optical fiber cable 1. The pair of tension strength members 60 extend substantially parallel to each other with the optical fiber units 10A to 10D disposed between the tension strength members 60.

As an example of the material of which the tensile strength member 60 is made, a non-metallic material and a metallic material can be exemplified. Although not particularly limited, as a specific example of the non-metallic material, for example, fiber reinforced plastic (FRP) such as glass fiber reinforced plastic (GFRP), aramid fiber reinforced plastic (KFRP) reinforced with Kevlar (registered trademark) and polyethylene fiber reinforced plastic reinforced with polyethylene fiber can be exemplified. On the other hand, although not particularly limited, as a specific example of the metallic material, for example, a metal wire such as a copper wire can be exemplified.

The tensile strength member 60 may not be embedded in the sheath 50. For example, similarly to the optical fiber unit 10 described above, the tensile strength member 60 may be housed in the inner space of the sheath 50. Alternatively, the optical fiber cable 1 may not include the tension strength member 60. The number of the tensile strength members 60 is not particularly limited to the above and can be appropriately designed.

The rip cords 70 are string-like members (tear strings) for tearing the sheath 50 at a middle portion of the optical fiber cable 1 to take out the multi-core optical fibers 30 to the outside. Each of the rip cords 70 extends along the axial direction of the optical fiber cable 1, and the pair of rip cords 70 are arranged so as to extend substantially parallel to each other with the optical fiber units 10A to 10D disposed between the rip cords 70. In the present embodiment, the direction in which the pair of rip cords 70 face each other is substantially perpendicular to the direction in which the pair of tensile strength members 60 face each other.

Although not particularly limited, the rip cord 70 is constituted by a fiber made of polyester, polyimide, aramid, glass or the like, or an assembly such as a yarn made by twisting the fibers. As the rip cord 70, the above-described yarn impregnated with resin may be used. As long as the rip cord 70 is disposed in the sheath 50, the entire rip cord 70 may be embedded in the sheath 50, or the rip cord 70 may be partially embedded in the sheath 50 so that a part of the rip cord 70 is exposed from the sheath 50. The rip cord 70 may be disposed in the sheath 50 as necessary, and the optical fiber cable 1 may not include the rip cord 70.

As shown in FIG. 4, display parts 51 are formed on the outer peripheral surface of the sheath 50 by printing or the like. Each of the display parts 51 includes a character string 52 and a length mark 53. The display parts 51 are arranged at intervals along the axial direction of the optical fiber cable 1. Although not particularly limited, for example, the display parts 51 are formed at intervals of 1 meter along the axial direction of the optical fiber cable 1.

The character string 52 is composed of one or a plurality of characters such as English, Japanese, numbers, and symbols. As a specific example of the character string 52, for example, a name of a manufacturer, an identification number of the manufacturer, a type of the cable, a lot number, a production year and the like can be exemplified. The character string 52 is arranged so that a worker can read the character string 52 only from a specific direction. Although not particularly limited, for example, in the example shown in FIG. 4, the character string 52 is arranged in a direction in which the character string 52 can be read by the worker located on the lower side of the optical fiber cable 1 in the figure. Although not particularly limited, the contents of the character string 52 are the same for all the display partis 51 in the optical fiber cable 1.

On the other hand, the length mark (Length Mark) 53 is a scale value indicating a distance from the first end 101 of the optical fiber cable 1. The length mark 53 increases in numerical value by one every one meter away from the first end 101. Therefore, the contents of the length marks 53 are different from each other for all the display parts 51 in the optical fiber cable 1. Similarly to the character string 52 described above, the length mark 53 is also arranged in a direction in which the worker can read the length mark 53 only from a specific direction. Although not particularly limited, the length mark 53 is arranged in the same direction as the character string 52.

In the present embodiment, a piece of arrangement information associated with the core arrangement of the multi-core optical fiber 30 is composed of the length mark 53 (a piece of first information) and the colors (a piece of second information) of the bundle members 25 and 26 described above. That is, first, the direction (reference direction) of the optical fiber cable 1 for distinguishing the core arrangement is specified by the length mark 53. Then, the colors of the bundle materials 25 and 26 of the respective optical fiber units 10A to 10D are set in accordance with the core arrangement of the multi-core optical fiber 30 using the reference direction as a reference. Note that the above-mentioned "arrangement information" does not include the order itself of arrangement of the cores 32A to 32D identified using the marker 33 as a reference (that is, the core arrangement). The arrangement information is information other than the core arrangement and means information associated with the core arrangement.

The optical fiber cables of the second to fourth embodiments also include the piece of arrangement information associated with the core arrangement of the multi-core optical fiber. In the optical fiber cables of the second to fourth embodiments, the piece of arrangement information may include the piece of first information for specifying the direction of the optical fiber cable and the piece of second information indicating the core arrangement using the direction specified by the piece of first information as a reference.

More specifically, in the present embodiment, as shown in Table 2 below, the direction in which the numerical value of the length mark 53 formed on the outer peripheral surface of the sheath 50 increases is specified as the reference direction. Here, when this reference direction is used as a reference, each of the core arrangements of the multi-core optical fibers 30 of the optical fiber units 10A and 10C is the "normal arrangement" (see FIG. 1 (a)), each of the core arrangements of the multi-core optical fibers 30 of the optical fiber units 10B and 10D is the "reverse arrangement" (see FIG. 1 (b)). In addition, for the optical fiber units 10A and 10C having the core arrangement of the "normal arrangement", the colors of the bundle members 25 and 26 are set to "Blue" and "Green". On the other hand, for the optical fiber units 10B and 10D having the core-arrangement of the "reverse arrangement", the colors of the bundle members 25 and 26 are set to "Orange" and "Brown".

That is, in the present embodiment, two or more pieces of the arrangement information associated with the two or more multi-core optical fibers 30 having the same core arrangement have the same content. In the second to fourth embodiments, the optical fiber cable may include the pieces of arrangement information associated with the multi-core optical fibers, and two or more pieces of the arrangement information associated with the two or more multi-core optical fibers having the same core arrangement may have the same content.

### <Table2>

**Table 2**

| | Optical fiber unit 10A | Optical fiber unit 10B | Optical fiber unit 10C | Optical fiber unit 10D |
|---|---|---|---|---|
| Reference (Direction) | When viewing the optical fiber cross section from the side with the smaller length mark value to the side with the larger length mark value | | | |
| Color of bundle member | Blue | Orange | Green | Brown |
| Core arrangement | Normal arrangement | Reverse arrangement | Normal arrangement | Reverse arrangement |

In the present embodiment, the length marks 53 (the piece of first information) for specifying the reference direction of the optical fiber cable 1 are disposed on the outer peripheral surface of the sheath 50 of the optical fiber cable 1 and are shared by the pieces of arrangement information respectively associated with the core arrangements of all the multi-core optical fibers 30 included in the optical fiber cable 1. In the optical fiber cables of the second to fourth embodiments, the piece of first information may be shared by the pieces of arrangement information respectively associated with the core arrangements of all the multi-core optical fibers included in the optical fiber cable.

On the other hand, the colors of the bundle members 25 and 26 indicating the core arrangement based on the reference direction are shared by the two or more pieces of arrangement information respectively associated with the core arrangements of all the multi-core optical fibers 30 included in each of the optical fiber units 10A to 10D. That is, the colors (the piece of second information) of the bundle members 25 and 26 are shared by the two or more pieces of arrangement information associated with the two or more multi-core optical fibers 30 having the same core arrangement. In the optical fiber cables of the second to fourth embodiments, the piece of second information may be shared by the two or more pieces of arrangement information associated with the two or more multi-core optical fibers having the same core arrangement.

As shown in Table 3 below, the color of one bundle member 25 and the color of the other bundle member 26 may be different from each other in the same optical fiber unit. Thus, it is possible to identify the optical fiber unit by the color of one bundle member 25 and distinguish the core arrangement of the optical fiber unit by the color of the other bundle member 26.

Specifically, in Table 3 below, it is possible to individually identify the optical fiber units (unit numbers: No. 1 to No.4) by the color ("Blue", "Yellow", "Green", and "Red") of one bundle member 25. Further, the fact that the color of the other bundle member 26 is "White" indicates that the core arrangement of the optical fiber unit is the "normal arrangement". On the other hand, the fact that the color of the bundle member 26 is "Orange" indicates that the core arrangement of the optical fiber unit is the "reverse arrangement". Also in this case, similarly to the example of Table 2 described above, the length mark 53 is used as the first information of the arrangement information.

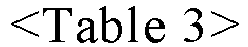

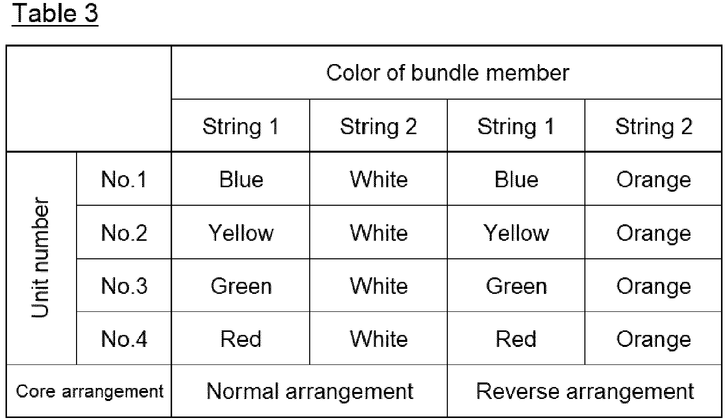

As the second information of the arrangement information of the multi-core optical fiber 30, other component other than the colors of the bundle members 25 and 26 in the optical fiber cable 1 may be used. At this time, it is preferable to use the existing component included in the optical fiber cable 1 as the second information. Also in this case, similarly to the example of Table 2 described above, the length mark 53 is used as the first information of the arrangement information.

For example, as shown in Table 4 below, the color of the colored layer 37 of the specific multi-core optical fiber 30 included in the optical fiber ribbon 20 may be used as the second information.

Table 4 below shows an example of four optical fiber ribbons 20 each of which is composed of four multi-core optical fibers 30. In this example, the fact that the color of the colored layers 37 of the fourth multi-core optical fiber 30 (fiber number: No.4) of the optical fiber ribbon 20 is "Gray" indicates that each of the core arrangements of all the multi-core optical fibers 30 (fiber number: No.1 to No.4) included in the optical fiber ribbon 20 is the "normal arrangement" (see FIG. 1(a)). On the other hand, the fact that the color of the colored layer 37 of the fourth multi-core optical fiber 30 is "Pink" indicates that each of the core arrangements of all the multi-core optical fibers 30 (fiber number: No.1 to No.4) included in the optical fiber ribbon 20 is the "reverse arrangement" (see FIG. 1(b)). Also in this case, similarly to the example of Table 2 described above, the length mark 53 is used as the first information of the arrangement information.

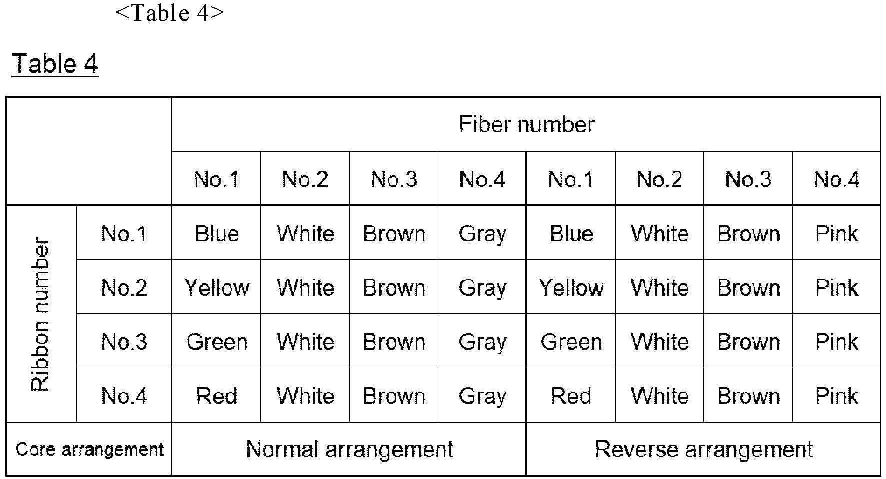

Alternatively, although a table is not particularly shown, the above-mentioned mark 36 of the multi-core optical fiber 30 may be used as the second information. For example, the marks 36 having the same pattern may be attached to the optical fiber ribbons 20 having the same core arrangement. Also in this case, similarly to the example of Table 2 described above, the length mark 53 is used as the first information of the arrangement information.

Although not particularly limited, for example, the mark 36 (see "No.1" in Table 1 described above) composed of one narrow ring 361 is set for the optical fiber ribbon 20 in which each of the core arrangements of all the multi-core optical fibers 30 is the "normal arrangement" using the direction specified by the length mark 53 as a reference. On the other hand, the mark 36 (see "No.2" in Table 1 described above) composed of two narrow rings 361 is set for the optical fiber ribbon 20 in which each of the core arrangements of all the multi-core optical fibers 30 is the "reverse arrangement".

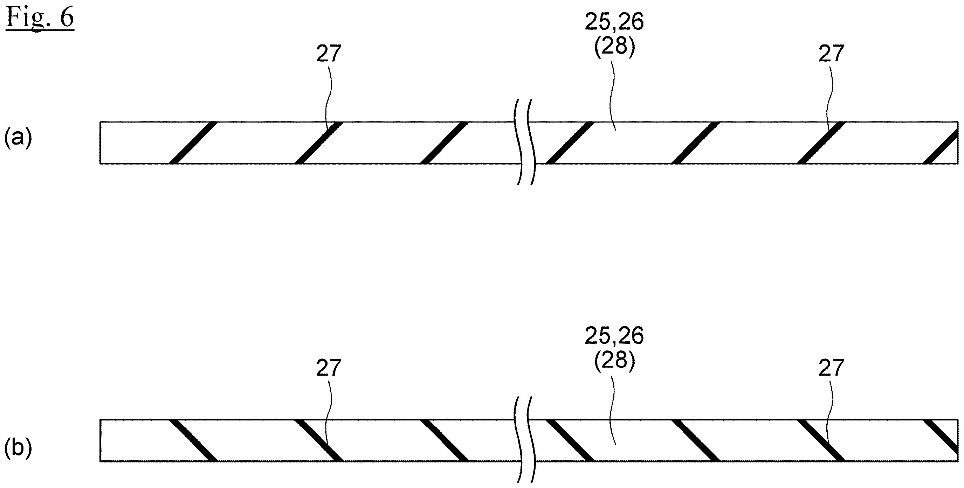

Alternatively, as shown in FIG. 6(a) and FIG. 6(b), the marks 27 may be printed on the bundle members 25 and 26, and the marks 27 may be used as the second information. FIG. 6(a) and FIG. 6(b) are plan views showing the marks 27 attached to the optical fiber unit of the optical fiber cable in the second embodiment of the present invention, and FIG. 6 (b) is a diagram showing the marks 27 inverted with respect to FIG. 6 (a).

The marks 27 shown in FIG. 6(a) and FIG. 6(b) are slant lines inclined with respect to the axial direction of the bundle members 25 and 26. For example, as shown in FIG. 6 (a), when the slant line rises toward the right in the figure, this mark 27 indicates that each of the core arrangements of all the multi-core optical fibers 30 included in the optical fiber unit is the "normal arrangement" (see FIG. 1 (a)). On the other hand, as shown in FIG. 6(b), when the slant line descends toward the right in the figure, this mark 27 indicates that each of the core arrangements of all the multi-core optical fibers 30 included in the optical fiber unit is the "reverse arrangement" (see FIG. 1(b)). Also in this case, similarly to the example of Table 2 described above, the length mark 53 is used as the first information of the arrangement information.

Other component included in the optical fiber unit may be used as the second information of the arrangement information of the multi-core optical fiber 30. For example, in the case where the optical fiber cable is of the above-described loose tube type, instead of the bundle member, the mark 27 may be formed on the outer peripheral surface of a cylindrical tube member 28 covering the optical fiber ribbons. Alternatively, although not specifically illustrated, the color of the tube member 28 may be used as the second information. Also in this case, similarly to the example of Table 2 described above, the length mark 53 is used as the first information of the arrangement information.

Incidentally, in the case of the bundle members 25 and 26, the linear body shown in FIG. 6 (a) or FIG. 6 (b) is wound around the outer periphery of the optical fiber ribbons 20 bundled together (see FIG. 5). On the other hand, in the case of the tube member 28, the optical fiber ribbons 20 bundled together are inserted into the cylindrical body shown in FIG. 6(a) or FIG. 6(b).

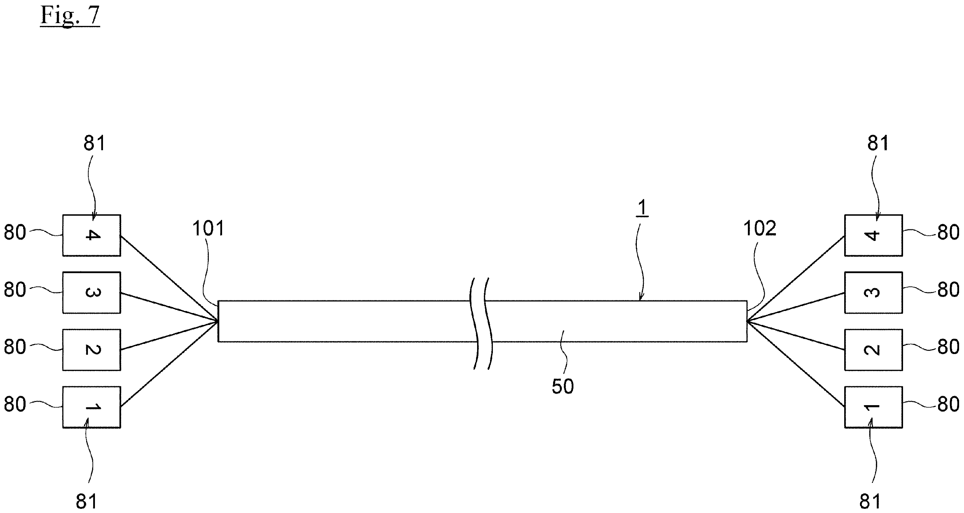

Alternatively, as shown in FIG. 7, an optical connector 80 may be connected to the terminal of each multi-core optical fiber 30 of the optical fiber cable 1, and the connector number 81 attached to each optical connector 80 may be used as the second information. FIG. 7 is a plan view showing the optical fiber cable 1 with the optical connector 80 in the third embodiment of the present invention. The number of the multi-core optical fibers 30 included in the optical fiber cable 1 is not particularly limited to the example shown in FIG. 7.

In the example shown in FIG. 7, the eight optical connectors 80 are respectively assigned connector numbers 81 of "1" to "4". The optical connectors 80 having the same connector number 81 are connected to both ends of the same multi-core optical fiber 30. In the example shown in FIG. 7, the optical connectors 80 having the connector numbers 81 of "1" and "3" indicates that the core arrangement of the multi-core optical fiber 30 is the "normal arrangement" (see FIG. 1(a)). On the other hand, the optical connectors 80 having the connector numbers 81 of "2" and "4" indicates that the core arrangement of the multi-core optical fiber 30 is the "reverse arrangement" (see FIG. 1(b)). Also in this case, similarly to the example of Table 2 described above, the length mark 53 is used as the first information of the arrangement information.

In the example shown in FIG. 7, the numbers of all the optical connectors 80 are different from each other, but the number of the optical connector is not limited thereto. The optical connectors 80 connected to multi-core optical fibers 30 having the same core arrangement may be given the same number.

In the example shown in FIG. 7, the number 81 attached to the optical connector 80 is used as the second information, but the second information is not particularly limited thereto. For example, the color of the optical connector 80 may be used as the second information. Also in this case, similarly to the example of Table 2 described above, the length mark 53 is used as the first information of the arrangement information.

The orientation of the connector numbers 81 of the four optical connectors 80 on the first end 101 side of the optical fiber cable 1 and the orientation of the connector numbers 81 of the four optical connectors 80 on the opposite second end 102 side may be aligned in the same direction. In this case, since the direction (reference direction) of the optical fiber cable 1 for distinguishing the core arrangement can be specified by the direction of the connector number 81, the length mark 53 may not be used as the first information.

The component connected to the terminal of the optical fiber cable 1 is not limited to the optical connector 80 as long as it is an optical connection component. For example, FIFO (Fan-in/Fan-out) device may be connected to the terminals of each multi-core optical fiber 30 of the optical fiber cable 1. The FIFO device is a device that connects each core of the multi-core optical fiber and the single-core optical fiber. As a specific example of the FIFO device, for example, a fiber-bundle type, a melt-drawing type, a spatial optical type, a planar optical waveguide type and the like can be exemplified. The FIFO device may be numbered, and the number may be used as the second information. Also in this case, similarly to the example of Table 2 described above, the length mark 53 is used as the first information of the arrangement information.

In the above example, any one of the colors of the bundle members 25 and 26 (or the color of the tube member 28), the color of the colored layer 37, the pattern of the mark 36, the mark 27 of the bundle members 25 and 26 (or the mark 27 of the tube member 28), the connector number 81 of the optical connector 80 (or the number of the FIFO device), or the color of the optical connector 80 (or the color of the FIFO device) is used alone as the second information, but the second information is not limited thereto. A combination of two or more among these elements may be used as the second information.

The display part 51 of the sheath 50 described above may include only one of the character string 52 or the length mark 53. Instead of the length mark 53, the direction of the character string 52 may be used as the first information of the arrangement information. Alternatively, the direction of the length mark 53 may be used as the first information of the arrangement information. In the second to fourth embodiments, the direction of the character string of the display part or the direction of the length mark of the display part may be used as the first information of the arrangement information.

The display part 51 of the sheath 50 may include a pattern (hereinafter, also simply referred to as a "point-asymmetric pattern") that is not point-symmetric on the axial direction of the optical fiber cable 1 in a plan view, and the point-asymmetric pattern may be used as the first information of the arrangement information. As a specific example of the point-asymmetric pattern, for example, a geometric shape such as a figure, an arrangement (relative positional relationship) of shapes, an arrangement (relative positional relationship) of colors and the like can be exemplified. In the second to fourth embodiments, a pattern (a point-asymmetric pattern) of a display part that is not point-symmetric on the axial direction of the optical fiber cable may be used as the first information of the arrangement information.

As an example of the shape constituting the point-asymmetric pattern described above, for example, an arrow extending along the axial direction of the optical fiber cable 1 can be exemplified. As an example of the arrangement of the shapes constituting the point-asymmetric pattern described above, for example, a pair of straight lines extending in parallel along the axial direction of the optical fiber cable 1 and having different thicknesses from each other can be exemplified. As an example of the arrangement of colors constituting the point-asymmetric pattern described above, for example, a pair of straight lines extending in parallel along the axial direction of the optical fiber cable 1 and having different colors from each other can be exemplified.

Alternatively, although not particularly illustrated, a dot row or a dot group formed by arranging dots may be used as the point-asymmetric pattern described above. For example, as the display part 51, a pair of dot rows extending in parallel along the axial direction of the optical fiber cable 1 may be formed on the outer peripheral surface of the sheath 50, and the pair of dot rows are composed of dots of different colors. Alternatively, as the display part 51, dot groups arranged along the axial direction of the optical fiber cable 1 at different intervals may be formed on the outer peripheral surface of the sheath 50. Alternatively, as the display part 51, dot groups composed of different numbers of dots may be arranged on the outer peripheral surface of the sheath 50 along the axial direction of the optical fiber cable 1.

When the core arrangements of all the multi-core optical fibers 30 included in the optical fiber cable 1 are the same, since it is possible to specify the reference direction of the optical fiber cable 1 and also specify the core arrangement based on the reference direction by using the above-described point-asymmetric pattern as the arrangement information, the point-asymmetric pattern can function as both the first and second information of the arrangement information. That is, in this case, only the above-described point-asymmetric pattern may be used as the arrangement information, and an element for indicating only the second information is not required.

Alternatively, the display part 51 may be formed in other component other than the sheath 50 in the optical fiber cable 1, and the display part 51 may be used as the first information. Here, the component other than the sheath 50 in the optical fiber cable 1 is a member extending along the entire length of the optical fiber cable 1. As a specific example of such component, for example, the wrapping tape 41, the optical fiber ribbon 20 and the tensile strength member 60 can be exemplified. Although not particularly limited, for example, the display part 51 including the character string 52 and the length mark 53 may be formed on the outer surface of the optical fiber ribbon 20, and the length mark 53 may be used as the first information for specifying the reference direction of the optical fiber cable 1. In the second to fourth embodiments, a display part formed in other component other than the sheath in the optical fiber cable may be used as the first information of the arrangement information.

The optical fiber cable 1 described above is installed in, for example, an underground space, an overhead space, or an indoor space by workers. The optical fiber cables of the second to fourth embodiments can also be installed in the same method as described below.

For example, when the optical fiber cable 1 is installed in the underground conduit in order to connect the optical fiber cable 1 to another optical fiber cable that has already been installed in the underground conduit, the worker distinguishes the core arrangement of each multi-core optical fiber 30 included in the optical fiber cable 1 by referring to the arrangement information (the length mark 53 and the colors of the bundle members 25 and 26 described above) of each multi-core optical fiber 30.

Specifically, first, the worker confirms the direction in which the numerical value of the length mark 53 formed on the outer peripheral surface of the optical fiber cable 1 increases. Thus, the direction of the optical fiber cable 1 (the above-described reference direction) for distinguishing the core arrangement is specified. For example, in the example shown in FIG. 4, since the numerical value of the length mark 53 increases from the left side to the right side in the figure, the direction from the first end 101 to the second end 102 is specified as the above-described reference direction.

Next, the worker confirms the colors of the bundle members 25 and 26 of each of the optical fiber units 10A to 10D. Thus, the core arrangement of each of the optical fiber units 10A to 10D based on the above-described reference direction is specified. For example, in the example shown in Table 2 above, the core arrangement of the optical fiber unit 10A in which the colors of the bundle members 25 and 26 are "Blue" is identified as the "normal arrangement", and the core arrangement of the optical fiber unit 10C in which the colors of the bundle members 25 and 26are "Green" is also identified as the "normal arrangement". On the other hand, the core arrangement of the optical fiber unit 10B in which the colors of the bundle members 25 and 26 are "Orange" is identified as the "reverse arrangement", and the core arrangement of the optical fiber unit 10D in which the colors of the bundle members 25 and 26 are "Brown" is also identified as the "reverse arrangement".

Then, the worker confirms that the core arrangement of each of the optical fiber units 10A to 10D is the same as the preset core arrangement (that is, that the direction of the optical fiber cable 1 is appropriate), and then, the worker introduces the optical fiber cable 1 into the underground conduit. In this way, by confirming the core arrangement of each of the optical fiber units 10A to 10D before introducing the optical fiber cable 1 into the underground conduit, it is possible to prevent the occurrence of a situation in which the core arrangement of the optical fiber cable 1 is found to be incorrect after installation and the installing work has to be redone.

The worker may hold association information as shown in Table 2 above at the installation site, when distinguishing the core arrangement of the multi-core optical fiber 30 based on the length mark 53 and the colors of the bundle members 25 and 26, the worker may check while referring to the association information.

The association information is information that associates the arrangement information with the core arrangement. For example, in a case where the color of the colored layer 37 of the multi-core optical fiber 30 is used as the second information, the association information is information that associates the color of the colored layer 37 with the core arrangement and has contents as shown in Table 4 described above. When the mark 36 of the multi-core optical fiber 30 is used as the second information, the association information is information that associates the pattern of the mark 36 with the core arrangement. When the connector number 81 of the optical connector 80 is used as the second information, the association information is information that associates the connector number 81 with the core arrangement. The association information may include information related to the first information. The association information may be printed on a paper medium or may be displayed on a portable terminal such as a tablet.

The optical fiber cable 1 is connected to a counterpart optical fiber cable, for example, in a closure or an optical termination box disposed in the installation site. Specifically, the multi-core optical fiber 30 included in the optical fiber cable 1 is fusion-spliced or optically connected via a mechanical splice element or an optical connector to the optical fiber included in the counterpart optical fiber cable. At this time, in the present embodiment, the worker refers to the arrangement information of the multi-core optical fiber 30 (the length mark 53 and the colors of the bundle members 25 and 26 described above), and, for example, confirms that the core arrangement of the multi-core optical fiber 30 of the optical fiber cable 1 is the same as the preset core arrangement set in advance, and then, the worker connects the multi-core optical fiber 30 to the counterpart optical fiber.

Although not particularly limited, as a specific example of the optical connector, an optical connector including a ferrule and a sleeve, an optical connector including a spatial optical system including lenses, an optical connector including an optical waveguide and the like can be exemplified.

Alternatively, the optical fiber cable 1 may be connected to a counterpart optical component such as, for example, a PLC (Planar Lightwave Circuit) or a silicone waveguide chip. Specifically, the multi-core optical fiber 30 included in the optical fiber cable 1 is optically connected to the optical waveguide included in the counterpart optical component via the optical fiber array. At this time, in the present embodiment, the worker refers to the arrangement information of the multi-core optical fiber 30 (the length mark 53 and the colors of the bundle members 25 and 26 described above), and, for example, confirms that the core arrangement of the multi-core optical fiber 30 of the optical fiber cable 1 is the same as the preset core arrangement set in advance, and then, the worker connects the multi-core optical fiber 30 to the counterpart optical waveguide.

As an example of the optical fiber array, one in which optical fibers are positioned in grooves formed in the substrate so as to extend to an edge of the substrate and the end faces of the optical fibers are disposed at the edge of the substrate can be exemplified. As the cross-sectional shape of the groove, for example, a V-shape or a U-shape can be exemplified. The substrate may include a means other than the groove as a means for positioning the optical fiber.

As described above, in the present embodiment, the optical fiber cable 1 includes the arrangement information associated with the core arrangement of the multi-core optical fiber 30. Since the worker can easily distinguish the core arrangement of the multi-core optical fiber 30 by referring to the arrangement information at the installation site, it is possible to improve the workability of the installing work and the connecting work of the optical fiber cable 1.

Further, in the present embodiment, the length mark 53 and the colors of the bundle members 25 and 26 that are also present in existing optical fiber units are used as the arrangement information associated with the core arrangement of the multi-core optical fiber 30. In this way, since the existing component of the optical fiber cable 1 are used as the arrangement information, it is possible to suppress an increase in the cost of the optical fiber cable 1 due to the addition of the arrangement information.

Further, in the present embodiment, since the core arrangements of all the multi-core optical fibers 30 included in each of the optical fiber units 10A to 10D are the same, it is easy to manage the core arrangement in the optical fiber cable 1.

Further, in the present embodiment, the same optical fiber cable 1 includes both the multi-core optical fiber 30 having the core arrangement of the "normal arrangement" and the multi-core optical fiber 30 having the core arrangement of the "reverse arrangement". Therefore, for example, it is possible to reduce the occupied area of the optical fiber cable 1 in comparison with the case where the optical fiber cable including only the multi-core optical fiber having the core arrangement of the "normal arrangement" and the optical fiber cable including only the multi-core optical fiber having the core arrangement of the "reverse arrangement" are installed in the conduit.

The optical transmission system including the optical fiber cable 1 described above connects an upstream side (for example, a communication facility center of a communication carrier or the like) and a downstream side (for example, a user base or the like). The optical transmission system may include optical fiber cables of the second to fourth embodiments. The optical transmission system includes a first transmission path for uplink (upload) and a second optical transmission path for downlink (download). The first and second transmission paths include, in addition to the optical fiber cable 1 described above, other optical fiber cables connected to the optical fiber cable 1, and optical components such as an optical connector connected to the optical fiber cable 1. In the present embodiment, "uplink (upload)" means communication from the downstream side to the upstream side, and "downlink (download)" means communication from the upstream side to the downstream side.

In the present embodiment, the optical fiber units 10A and 10C having the core arrangement of the "normal arrangement" is included in the first optical transmission path for uplink. Each of the core arrangements of all the multi-core optical fibers 30 included in the first optical transmission line is the "normal arrangement". On the other hand, the optical fiber units 10B and 10D having the core-arrangement of the "reverse arrangement" is included in the second optical transmission path for downlink. Each of the core arrangements of all the multi-core optical fibers 30 included in the second optical transmission path is the "reverse arrangement".

As described above, in the present embodiment, the first optical transmission path for uplink includes the optical fiber units 10A and 10C having the normal arrangement, and the second optical transmission path for downlink includes the optical fiber units 10B and 10D having the reverse arrangement. In this way, by selectively using the multi-core optical fiber 30 for uplink/downlink in accordance with the core arrangement, it is possible to improve the workability of the installing work and the connecting work of the optical fiber cable 1.

It should be noted that the embodiment described above are described to facilitate understanding of the present disclosure and are not described to limit the present disclosure. It is therefore intended that the elements disclosed in the above embodiment include all design modifications and equivalents to fall within the technical scope of the present disclosure.

The number of optical fiber units included in the optical fiber cable 1 is not particularly limited to the above. For example, the fiber optic cable 1 may include one to three optical fiber units. Alternatively, the optical fiber cable 1 may include five or more optical fiber units.

Further, in the above-described embodiment, the multi-core optical fiber 30 included in the optical fiber units 10A and 10C has the core arrangement of the "normal arrangement", whereas the multi-core optical fiber 30 included in the optical fiber units 10B and 10D has the core arrangement of the "reverse arrangement". That is, in the optical fiber cable 1 described above, the multi-core optical fiber 30 of the "normal arrangement" and the multi-core optical fiber 30 of the "reverse arrangement" are mixed, but it is not particularly limited thereto. Each of the core arrangements of all the multi-core optical fibers 30 included in the optical fiber cable 1 may be the "normal arrangement", or each of the core arrangements of all the multi-core optical fibers may be the "reverse arrangement". That is, all the multi-core optical fibers 30 included in the optical fiber cable 1 may have the same core arrangement.

Further, in the optical fiber-cable 1 of the above-described embodiment, the number of the multi-core optical fibers 30 having the core arrangement of the "normal arrangement" and the number of the multi-core optical fibers 30 having the core arrangement of the "reverse arrangement" are the same, but it is not particularly limited to thereto. The number of multi-core optical fibers having the core arrangement of the "normal arrangement" in the optical fiber-cable may be different from the number of multi-core optical fibers having the core arrangement of the "reverse arrangement" in the optical fiber cable.

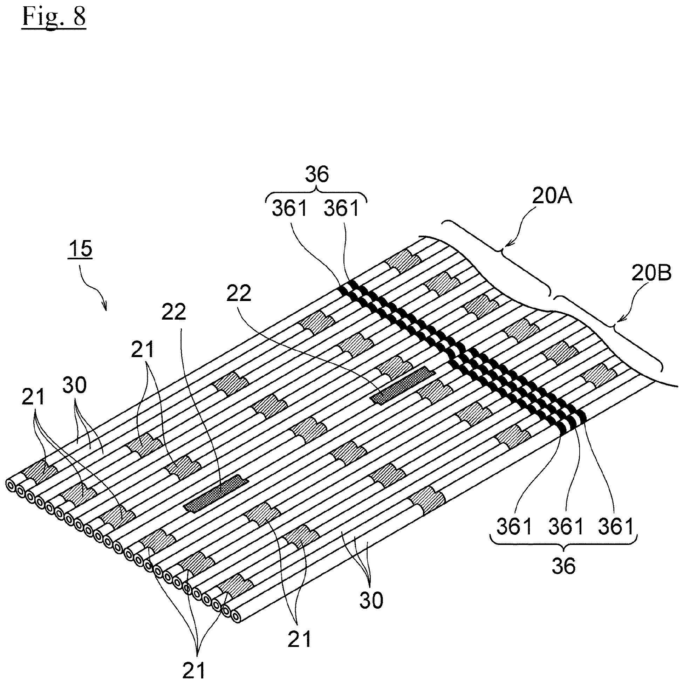

Further, in the above-described embodiment, the core arrangements of all the multi-core optical fibers 30 included in the same optical fiber unit are the same, but it is not particularly limited thereto. For example, the optical fiber unit may be configured by using the subunit 15 as shown in FIG. 8. FIG. 8 is a perspective view showing the subunit 15 of the optical fiber cable in the fourth embodiment of the present invention.

The subunit 15 shown in FIG. 8 includes two optical fiber ribbons 20A and 20B. Although not particularly limited, in the fourth embodiment, the subunits 15 bundled together are bundled by the bundle members 25 and 26 to constitute an optical fiber unit. Both optical fiber ribbons 20A and 20B have the same configuration as the optical fiber ribbon 20 described above. The two optical fiber ribbons 20A and 20B are connected by second connecting portions 22.

In the embodiment shown in FIG. 8, each of the core arrangements of all the multi-core optical fibers 30 included in one optical fiber ribbon 20A is the "normal arrangement" (see FIG. 1(a)), whereas each of the core arrangements of all the multi-core optical fibers 30 included in the other optical fiber ribbon 20B is the "reverse arrangement" (see FIG. 1(b)), and the core arrangement of one optical fiber ribbon 20A and the core arrangement of the other optical fiber ribbon 20B are opposite.

In the example shown in FIG. 8, the pattern of the mark 36 of the multi-core optical fiber 30 is used as the second information. Specifically, the mark 235 composed of two rings 361 indicates that the core arrangement of one optical fiber ribbon 20A is the "normal arrangement". On the other hand, the mark 235 composed of three rings 361 indicates that the core arrangement of the other optical fiber ribbon 20B is the "reverse arrangement".

The optical fiber unit may be configured using the subunit 15, and in this case, the multi-core optical fiber 30 of the "normal arrangement" and the multi-core optical fiber 30 of the "reverse arrangement" are mixed in one optical fiber unit. By configuring the optical fiber unit using the subunit 15, it is possible to easily manage the core arrangement in the optical fiber cable.

In the fourth embodiment, instead of the pattern of the mark 36, the color of the colored layer 37, the connector number 81 of the optical connector 80 (or the number of the FIFO device) or the color of the optical connector 80 (or the color of the FIFO device) may be used as the second information. Alternatively, a combination of two or more elements among the pattern of the mark 36, the color of the colored layer 37, the connector number 81 of the optical connector 80 (or the number of the FIFO device) and the color of the optical connector 80 (or the color of the FIFO device) may be used as the second information.

In the above-described embodiment, all the multi-core optical fibers 30 constituting the same optical fiber ribbon 20 have the same core arrangement, but the core arrangement of the optical fiber ribbon 20 is not limited thereto. Although not particularly illustrated, in the fifth embodiment of the present invention, the same (one) optical fiber ribbon 20 includes the multi-core optical fiber 30 having the core arrangement of the "normal arrangement" and the multi-core optical fiber 30 having the core arrangement of the "reverse arrangement".

In addition to the multi-core optical fiber 30, a single-core optical fiber having a single core may be included in the optical fiber constituting the optical fiber ribbon 20. That is, the multi-core optical fiber 30 and the single-core optical fiber may be mixed as the optical fibers included in the optical fiber ribbon.

In the fifth embodiment, the display part 51 (refer to FIG. 4) including the character string 52 and the length mark 53 is formed on the outer surface of the optical fiber ribbon 20, and the length mark 53 is used as the first information of the arrangement information. Further, in the fifth embodiment, the color of the colored layer 37 of each multi-core optical fiber 30 included in the optical fiber ribbon 20 is used as the second information of the arrangement information. In the fifth embodiment, the length mark 53 (the piece of first information) for specifying the reference direction of the optical fiber ribbon 20 is disposed on the outer surface of the optical fiber ribbon 20, and the length mark 53 (the piece of first information) is shared by the pieces of arrangement information associated with the core arrangements of all the multi-core optical fibers 30 included in the optical fiber ribbon 20.

Although not particularly limited, for example, when the same optical fiber ribbon 20 includes six multi-core optical fibers 30 having the core arrangement of the "normal arrangement" and the remaining six multi-core optical fibers 30 having the core arrangement of the "reverse arrangement", the color of the colored layers 37 of the six multi-core optical fibers 30 having the core arrangement of the "normal arrangement" is set to "Gray". On the other hand, the color of the colored layers 37 of the remaining six multi-core optical fibers 30 having the core arrangement of the "reverse arrangement" is set to "Pink". In this case, the direction in which the numerical value of the length mark 53 increases is specified as a reference direction, and then, the core arrangement of each of the multi-core optical fibers 30 can be specified by confirming the color of the colored layer 37 of each of the multi-core optical fibers 30.

As the second information of the arrangement information of the multi-core optical fiber 30, other component other than the color of the colored layer 37 in the optical fiber ribbon 20 may be used. At this time, it is preferable to use the existing component included in the optical fiber ribbon 20 as the second information. For example, the marks 36 of the individual multi-core optical fibers 30 included in the optical fiber ribbon 20 may be used as the second information. In this case, the marks 36 corresponding to the core arrangements of the individual multicore optical fibers 30 are individually attached to the multi-core optical fibers 30 included in one optical fiber ribbon 20. Also in this case, similarly to the example of Table 2 described above, the length mark 53 is used as the first information of the arrangement information.

Since it is possible to easily distinguish the core arrangement of the multi-core optical fiber 30 by configuring the optical fiber cable using the optical fiber ribbon 20, it is possible to improve the ease of managing of the core arrangement and improve the workability of the installing work and the connecting work of the optical fiber cable.

In the fifth embodiment, instead of the length mark 53, the direction of the character string 52 may be used as the first information of the arrangement information. Alternatively, the direction of the length mark 53 may be used as the first information of the arrangement information. The display part 51 of the sheath 50 may include a pattern (a point-asymmetric pattern) that is not point-symmetric on the axial direction of the optical fiber ribbon 20 in a plan view, and the point-asymmetric pattern may be used as the first information of the arrangement information.

The core arrangements of all the multi-core optical fibers 30 included in the same (one) optical fiber ribbon 20 may be the same. In this case, by using the above-described point-asymmetric pattern as the arrangement information, the point-asymmetric pattern can function as both of the first and second information of the arrangement information. That is, in this case, it is sufficient to use only the point-asymmetric pattern as the arrangement information, and an element for indicating only the second information is not required.

In the optical transmission system of the above-described embodiment, each of the core arrangements of all the multi-core optical fibers 30 included in the first optical transmission path is the "normal arrangement", and each of the core arrangements of all the multi-core optical fibers 30 included in the second optical transmission path is the "reverse arrangement", but the core arrangements of the first and second optical transmission paths are not particularly limited thereto. Each of the core arrangements of all the multi-core optical fibers 30 included in both the first and second optical transmission paths may be the "normal arrangement", or each of the core arrangements of all the multi-core optical fibers 30 included in both the first and second optical transmission paths may be the "reverse arrangement".

### [EXPLANATIONS OF LETTERS OR NUMERALS]

- 1: Optical fiber cable
- 101 and 102: End
- 10A to 10D: Optical fiber unit
- 15: Subunit
- 20 and 20B: Optical fiber ribbon
- 21: First connecting portion
- 22: Second connecting portion
- 25 and 26: Bundle member
- 251 and 261: Reversing portion
- 27: Mark
- 30: Multi-core optical fiber
- 31: Bare optical fiber
- 32A to 32D: Core
- 33: Marker
- 34: Cladding
- 35: Coating layer
- 351: Primary layer
- 352: Secondary layer
- 36: Mark
- 361: Ring
- 37: Colored layer
- 40: Wrapping tube
- 41: Wrapping tape
- 50: Sheath
- 51: Display part
- 52: Character string
- 53: Length mark
- 60: Tensile strength member
- 70: Rip cord
- 80: Optical connector

## Claims

1. An optical fiber cable comprising:
a multi-core optical fiber comprising cores; and
a piece of arrangement information associated with the multi-core optical fiber, wherein
the piece of arrangement information is associated with a core arrangement of the cores in a cross-section of the multi-core optical fiber.

2. The optical fiber cable according to claim 1, further comprising:
multi-core optical fibers each of which is the multi-core optical fiber; and
pieces of arrangement information each of which is the piece of arrangement information, wherein
the pieces of arrangement information are associated with the multi-core optical fibers respectively,
two or more pieces of arrangement information have the same content, and the two or more pieces of arrangement information are included in the pieces of arrangement information and are associated with two or more multi-core optical fibers included in the multi-core optical fibers and having the same core arrangement.

3. The optical fiber cable according to claim 1 or 2, wherein
the piece of arrangement information comprises:
a piece of first information that specifies a direction of the optical fiber cable; and
a piece of second information that indicates the core arrangement based on the direction specified by the piece of first information.

4. The optical fiber cable according to claim 3, wherein
the piece of first information is shared by pieces of arrangement information each of which is the piece of arrangement information, and
the piece of second information is shared by two or more pieces of arrangement information that are included in the pieces of arrangement information and are associated with two or more multi-core optical fibers included in the multi-core optical fibers and having the same core arrangement.

5. The optical fiber cable according to claim 3 or 4, wherein
the piece of first information includes:
a content of a display part disposed on an outer peripheral surface of the optical fiber cable or a component of the optical fiber cable, or
a direction of the display part, and
the piece of second information includes:
a color of a linear body or a cylindrical body that holds multi-core optical fibers each of which is the multi-core optical fiber,
a mark disposed on the linear body or the cylindrical body,
a color of a colored layer that the multi-core optical fiber comprises, or
a mark that the multi-core optical fiber comprises.

6. The optical fiber cable according to any one of claims 1 to 5, wherein
the optical fiber cable comprises an optical connecting component connected to an end of the multi-core optical fiber, and
at least a part of the piece of arrangement information is disposed in the optical connecting component.

7. The optical fiber cable according to any one of claims 1 to 6, wherein
the optical fiber cable comprises an optical fiber ribbon comprising the multi-core optical fiber, and
at least a part of the piece of arrangement information is disposed in the optical fiber ribbon.

8. The optical fiber cable according to any one of claims 1 to 7, wherein
the optical fiber cable comprises multi-core optical fibers each of which is the multi-core optical fiber, and
the multi-core optical fibers include:
a first multi-core optical fiber in which the core arrangement is a first arrangement, and
a second multi-core optical fiber in which the core arrangement is a second arrangement opposite to the first arrangement.

9. The optical fiber cable according to claim 8, wherein
the number of first multi-core optical fibers included in the optical fiber cable is the same as the number of second multi-core optical fibers included in the optical fiber cable, each of the first multi-core optical fibers is the first multi-core optical fiber, and each of the second multi-core optical fibers is the second multi-core optical fiber.

10. The optical fiber cable according to any one of claims 1 to 8, wherein
the optical fiber cable comprises an assembly comprising optical fibers assembled,
the optical fibers include multi-core optical fibers each of which is the multi-core optical fiber,
the core arrangements of all of the multi-core optical fibers included in the assembly are the same, and each of the core arrangements is the core arrangement.

11. The optical fiber cable according to claim 10, wherein
the optical fiber cable comprises the assemblies each of which is the assembly,
the assembles includes a first assembly and a second assembly,
each of the core arrangements of all of the multi-core optical fibers included in the first assembly is a first arrangement, and
each of the core arrangements of all of the multi-core optical fibers included in the second assembly is a second arrangement opposite to the first arrangement.

12. An optical fiber ribbon comprising:
a multi-core optical fiber comprising cores; and
a piece of arrangement information associated with the multi-core optical fiber, wherein
the piece of arrangement information is associated with a core arrangement of the cores in a cross-section of the multi-core optical fiber.

13. A method of installing an optical fiber cable comprising: a multi-core optical fiber comprising: cores; and a piece of arrangement information associated with the multi-core optical fiber, wherein
the piece of arrangement information is associated with a core arrangement of the cores in a cross-section of the multi-core optical fiber, and
the method comprises referring step of referring the piece of arrangement information.

14. The method of installing the optical fiber cable according to claim 13, wherein
the piece of arrangement information comprises:
a piece of first information that specifies a direction of the optical fiber cable; and
a piece of second information that indicates the core arrangement based on the direction specified by the piece of first information, and
the referring step includes distinguishing the core arrangement of the multi-core optical fiber based on the piece of arrangement information.

15. The method of installing the optical fiber cable according to claim 13, wherein
the referring step includes distinguishing the core arrangement of the multi-core optical fiber based on the piece of arrangement information by using association information that associates the piece of arrangement information with the core arrangement.

16. An optical transmission system comprising an optical fiber cable comprising multi-core optical fibers each comprising cores, wherein
the multi-core optical fibers include:
a first multi-core optical fiber in which a core arrangement is a first arrangement, the core arrangement being an arrangement of the cores in a cross-section of the multi-core optical fiber, and
a second multi-core optical fiber in which the core arrangement is a second arrangement opposite to the first arrangement, and
the optical transmission system comprises:
a first transmission path for uplink comprising the first multi-core optical fiber, and
a second transmission path for downlink comprising the second multi-core optical fiber.
